# EUROPEAN PATENT APPLICATION

(11) **EP 4 797 237 A1**
(43) Date of publication of application: **26.08.2026**
(21) Application number: 25159709.2
(22) Date of filing: 24.02.2025
(51) Int. Cl.: G08G 1/00

(54) **INFORMATION OUTPUT SYSTEM AND METHOD**

(71) Applicant: ZKW Group GmbH, 3250 Wieselburg (AT)
(72) Inventor: Muttenthaler, Florian, 1220 Vienna (AT); Artmann, Matthäus, 3370 Ybbs (AT); Ivancsics, Johannes, 1030 Vienna (AT)
(74) Representative: Patentanwaltskanzlei Matschnig & Forsthuber OG

(57) **Abstract**

Information output system (10) for providing information to traffic participants (20) in real-time, comprising the following:
- at least one motor vehicle (50), including an information output device (100), which is configured to output information intended for external traffic participants (20) of the motor vehicle (50),
- at least one mobile communication device (200), which is configured to determine parameters that specify the information intended for the external traffic participant (20),
- a control device (300) for controlling the information output intended for the external traffic participant (20) of the motor vehicle (50) in real-time,

wherein the at least one mobile communication device (200) provides the control device (300) with location data of the mobile communication device (200) and the parameters that can be determined by the mobile communication device (200), wherein the motor vehicle (50) provides the control device (300) with location data of the motor vehicle (50),
and wherein the control device (300) is configured to compare the location data of the mobile communication device (200) with the location data of the motor vehicle (50) to determine whether the at least one motor vehicle (50) and the mobile communication device (200) are positioned in an output-proximity to one another, wherein upon determining the output-proximity, the control device (300) actuates the information output device (100) such that the information is output by the information output device (100).

## Description

The invention relates to an information output system for providing information to traffic participants in real-time.

Further, the invention relates to a method for outputting information to a traffic participant in real-time by an Information output system according to the invention.

Current systems for providing real-time information to traffic participants are largely limited to static or infrastructure-dependent solutions, such as roadside digital signage, vehicle-mounted indicators, and mobile navigation applications. These existing solutions often lack interactivity, real-time adaptability, and precise targeting of relevant information to specific users.

One of the primary disadvantages of traditional methods is the dependency on fixed infrastructure, which limits the flexibility and range of information dissemination. Roadside digital signage, for example, requires costly installations and maintenance, while being restricted to predefined locations. Mobile navigation applications, on the other hand, rely on user engagement and may not effectively communicate critical information to external traffic participants such as pedestrians and cyclists.

Additionally, existing vehicle-based information output systems are often limited to internal displays that benefit only the driver or passengers, neglecting communication with external traffic participants. This can result in missed opportunities for conveying important messages, such as safety warnings or targeted commercial information, to individuals outside the vehicle.

Furthermore, current systems do not efficiently integrate real-time location data from both vehicles and mobile users, leading to a lack of dynamic, context-sensitive communication. The absence of a unified control mechanism to manage and customize information output in a seamless manner further exacerbates these limitations.

The present invention addresses these shortcomings by introducing a highly flexible, interactive, and real-time information output system that overcomes the constraints of traditional methods, thereby enhancing communication and safety in modern traffic environments.

### Object of the invention

It is an object of the invention to provide an information output system which is improving the communication between motor vehicles and external traffic participants in real-time to enhance traffic safety, efficiency, and interaction in dynamic traffic environments.

### Solution of the object

To achieve this object the abovementioned information output system comprises:
- at least one motor vehicle, including:
   - at least one information output device, which is configured to output information intended for external traffic participants of the motor vehicle, wherein the information output device is arranged on the at least one motor vehicle in such a way that it allows external traffic participants to perceive the information output by the information output device,
- at least one mobile communication device, such as an external traffic participants smartphone, wherein the mobile communication device is configured to determine parameters that specify the information intended for the external traffic participant,
- a control device for controlling the information output intended for the external traffic participant of the motor vehicle in real-time, wherein the control device stores information intended for output by an information output device,

wherein the at least one mobile communication device is wirelessly connectable to the control device to provide the control device with location data of the mobile communication device and the parameters that can be determined by the mobile communication device,
wherein the motor vehicle is wirelessly connectable to the control device to provide the control device with location data of the motor vehicle,
and wherein the control device is configured to compare the location data of the mobile communication device with the location data of the motor vehicle to determine whether the at least one motor vehicle and the mobile communication device are positioned in an output-proximity to one another, such that the information to be output by the information output device of the at least one motor vehicle is perceptible by the external traffic participant, wherein upon determining the output-proximity, the control device actuates the information output device of the at least one motor vehicle such that the information specified based on the definable parameters is output by the information output device.

The present invention relates to an information output system designed to provide real-time information to traffic participants. The system comprises at least one motor vehicle equipped with an information output device, which is configured to display information intended for external traffic participants. This output device is strategically positioned on the motor vehicle to ensure visibility and perception by external traffic participants such as pedestrians, cyclists, and drivers of other vehicles.

A key feature of the system is its integration with at least one mobile communication device, such as a smartphone, which enables the determination of parameters specifying the information to be displayed. The system includes a control device responsible for managing and controlling the real-time output of information via the motor vehicle's output device. The control device is designed to store and process the information intended for display.

The mobile communication device and the motor vehicle are wirelessly connected to the control device, providing location data and predefined parameters to determine when the motor vehicle and the external traffic participant are in output-proximity. Once proximity is confirmed, the control device actuates the information output device to display the relevant information.

By automatically determining the proximity between a vehicle and an external traffic participant, the system ensures that information is only displayed when relevant. Additionally, this approach can enhance road safety by providing pedestrians and cyclists with real-time alerts regarding approaching vehicles, helping to prevent accidents and misunderstandings in urban environments.

The system supports various information output formats, including digital displays mounted externally on the vehicle. Furthermore, it enables customization of displayed information based on adjustable parameters, including traffic obstructions, vehicle position, time of day, location of the external traffic participant, and user-specific data such as purchasing behavior and search queries.

Additionally, the system allows for multiple motor vehicles to be connected, forming a network for enhanced information dissemination. Information can be sourced from authorities or advertising providers, and the control device can receive and broadcast real-time traffic updates to vehicles in affected areas.

The term "real time" in the context of an "information output system for providing information to a traffic participant in real time" means that the system delivers relevant information to the traffic participant without any noticeable delay. This requires immediate data processing so that current information is provided almost instantly after being captured. The latency between data collection and output is minimal, ensuring that the information remains useful. Such a system may adapt dynamically to changes in the environment by detecting traffic disruptions, weather conditions, or obstacles and updating the provided information in real time. Technically, this may be achieved through the use of sensors, GPS, mobile networks, cloud computing, or edge computing.

This invention enhances traffic communication, safety, and targeted information dissemination, creating a more interactive and responsive urban mobility environment.

Advantageously, the definable parameters are at least one of the parameters of the group: adjustable events, such as traffic obstructions; position of the vehicle; time of day; location of the at least one mobile communication device; information of purchasing behaviour and/or search queries of the external traffic participant.

By allowing various parameters to be defined, the system ensures that the displayed information is always relevant to the current traffic situation and/or the specific needs of external traffic participants. This adaptability enhances the effectiveness of the information output by providing real-time updates that are tailored to changing conditions, such as traffic congestion, road closures, or the behavior of individual users. As a result, the system contributes to more efficient traffic flow and a better-informed public.

Advantageously, the external traffic participant is a pedestrian, cyclist or a driver of a motor vehicle.

Since the system is designed to accommodate multiple types of road users, it significantly increases its applicability and usefulness. Pedestrians and cyclists, who are among the most vulnerable in traffic, can receive crucial real-time information, such as warnings about approaching vehicles or changing traffic conditions. Drivers, on the other hand, can benefit from targeted notifications that help improve reaction times and prevent accidents. This inclusive approach enhances overall road safety and improves communication between different types of traffic participants.

Advantageously, the mobile communication device is a smartphone.

Using a smartphone as the mobile communication device ensures seamless integration and ease of use, as these devices are already equipped with GPS, wireless communication, and app-based functionalities. This eliminates the need for additional hardware and allows users to interact with the system effortlessly through an intuitive interface. By leveraging the widespread adoption of smartphones, the system maximizes accessibility and ensures a high level of user engagement.

Advantageously, the information output device of the at least one motor vehicle is at least one display, which is disposed on the outside of the motor vehicle. Displays can also be parts of the car which are able to display information, for example the skin of a motor vehicle with integrated display devices. In this category is also comprised, for example, the windshield and/or windows of the motor vehicle.

The placement of the display on the exterior of the vehicle ensures that the outputted information is clearly visible to external traffic participants. This strategic positioning allows pedestrians, cyclists, and other drivers to quickly perceive and react to the displayed content. By providing direct visual communication, the system reduces uncertainty in traffic situations, helping to prevent misunderstandings and potential accidents. The technologies considered for the displays include Micro-LED, Mini-LED, segment LED displays, OLED, e-ink, as well as DMD-based projectors utilizing LED light sources. Advantageously, the information output system comprises a plurality of motor vehicles.

When multiple vehicles are equipped with the system, a network of interconnected vehicles may be created, allowing for coordinated and large-scale dissemination of real-time traffic information. This collective communication improves traffic management by enabling vehicles to share relevant updates about road conditions, hazards, or congestion. As a result, drivers receive timely information, which can help them make informed decisions, optimize routes, and enhance overall traffic efficiency.

Advantageously, the information to be output by the information output device is provided to the control device by authorities, government and/or advertising providers.

By incorporating data from official sources such as government agencies, the system ensures that the information displayed is accurate, reliable, and up-to-date. This is particularly beneficial for emergency alerts, road closures, or traffic advisories, as it allows for real-time dissemination of crucial information. Additionally, the integration of advertising providers creates opportunities for targeted messages, which can be customized based on the location and preferences of external traffic participants.

Advantageously, the control device is configured to receive information about traffic situations and broadcast the information to at least one information output device which is in the vicinity of the traffic situation.

The ability to dynamically broadcast traffic-related updates ensures that relevant information reaches the right audience at the right time. By distributing real-time alerts to vehicles and external traffic participants near a traffic event, the system enhances situational awareness and allows road users to adapt their behavior accordingly. This functionality contributes to reducing congestion, improving road safety, and optimizing urban mobility.

The object of the invention is also solved by a method for outputting information to a traffic participant in real-time by an information output system according to the invention, wherein the method comprises the following steps:
a) Providing
   - at least one motor vehicle, including:
   - at least one information output device, which is configured to output information intended for external traffic participants of the motor vehicle, wherein the information output device is arranged on the at least one motor vehicle in such a way that it allows external traffic participants to perceive the information output by the information output device.
   - at least one mobile communication device, such as an external traffic participants smartphone, wherein the mobile communication device is configured to determine parameters that specify the information intended for the external traffic participant.
   - a control device for controlling the intended information output for the external traffic participant of the motor vehicle in real-time, wherein the control device stores information intended for output by an information output device,

   wherein the at least one mobile communication device is wirelessly connectable to the control device to provide the control device with location data of the mobile communication device and the parameters that can be determined by the mobile communication device,
   wherein the motor vehicle is wirelessly connectable to the control device to provide the control device with location data of the motor vehicle,
b) Comparing the location data of the mobile communication device with the location data of the at least one motor vehicle by the control device to determine whether the at least one motor vehicle and the mobile communication device are positioned in an output-proximity to one another, such that the information to be output by the information output device of the at least one motor vehicle is perceptible by the external traffic participant,
c) Actuating the information output device of the at least one motor vehicle by the control device if the at least one motor vehicle is in output-proximity to the mobile communication device, such that the information specified based on the definable parameters is output by the information output device.

The embodiments disclosed in the description can be combined with one another in any desired manner, provided that such a combination is technically feasible. This applies even if a specific combination is not explicitly described.

### Short Description of the Drawings

In the following, in order to further demonstrate the present invention, illustrative and non-restrictive embodiments are discussed, as shown in the drawings, which show:
- Fig. 1: an example of an information output system for providing information to a traffic participant in real time, wherein the information output system comprising in the shown example a motor vehicle having several information output devices, a mobile communication device and a control device;
- Fig. 2: an example of a method for outputting information to a traffic participant in real-time by an information output system according to Fig. 1.

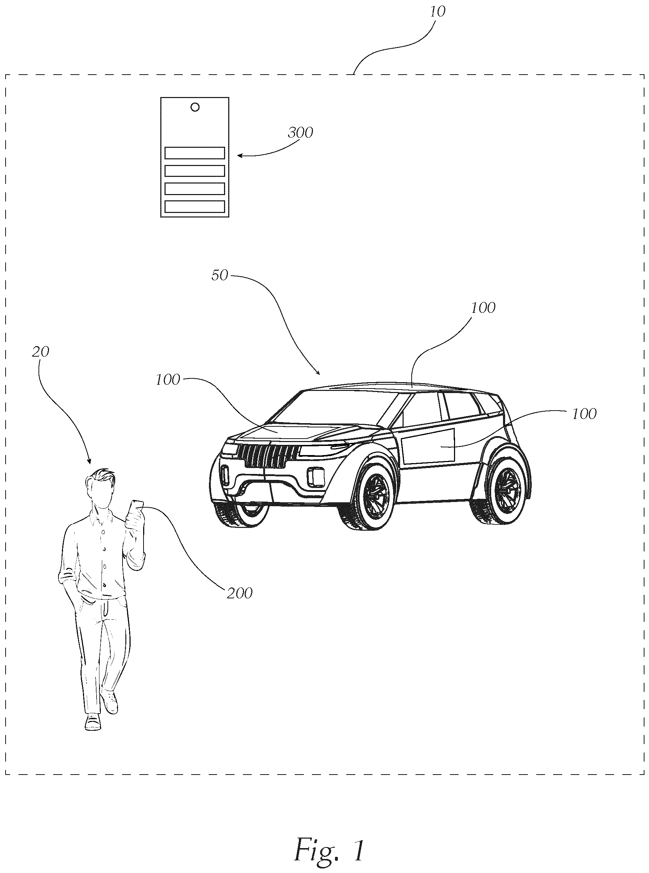

**Fig. 1** shows an exemplary information output system **10** for providing information to traffic participants **20** in real time, comprising a motor vehicle **50** including several information output devices **100,** which are configured to output information intended for an external traffic participant **20** of the motor vehicle **50.** The external traffic participant **20** is a pedestrian in the shown example, but could also be a cyclist or a driver of a motor vehicle.

The information output device **100** is arranged on the at least one motor vehicle **50** in such a way that it allows external traffic participants **50** to perceive the information output by the information output device **100.** In the shown example, the information output devices **100** of the motor vehicle **50** are built as displays, which are disposed on the outside of the motor vehicle **50.**

The information output system **10** further comprises a mobile communication device **200,** which is in the shown example a smartphone of the external traffic participants **20,** wherein the mobile communication device **200** is configured to determine parameters that specify the information intended for the external traffic participant **20.**

The definable parameters are at least one of the parameters of the group: adjustable events, such as traffic obstructions; position of the vehicle; time of day; location of the at least one mobile communication device **200;** information of purchasing behaviour and/or search queries of the external traffic participant **20.**

The information output system **10** further comprises a control device **300** for controlling the information output intended for the external traffic participant **20,** which is external of the motor vehicle **50,** in real-time, wherein the control device **300** stores information intended for output by an information output device **100.**

The information to be output by the information output device **100** is provided to the control device **300** by authorities, government and/or advertising providers.

The mobile communication device **200** is wirelessly connectable to the control device **300** to provide the control device **300** with location data of the mobile communication device **200** and the parameters that can be determined by the mobile communication device **200.** Also, the motor vehicle **50** is wirelessly connectable to the control device **300** to provide the control device **300** with location data of the motor vehicle **50.**

The control device **300** is configured to compare the location data of the mobile communication device **200** with the location data of the motor vehicle **50** to determine whether the at least one motor vehicle **50** and the mobile communication device **200** are positioned in an output-proximity to one another, such that the information to be output by the information output device **100** of the at least one motor vehicle **50** is perceptible by the external traffic participant **20.**

Upon determining the output-proximity, the control device **300** actuates the information output device **100** of the at least one motor vehicle **50** such that the information specified based on the definable parameters is output by the information output device **100.**

The control device **300** is also configured to receive information about traffic situations and broadcast the information to at least one information output device **100** which is in the vicinity of the traffic situation.

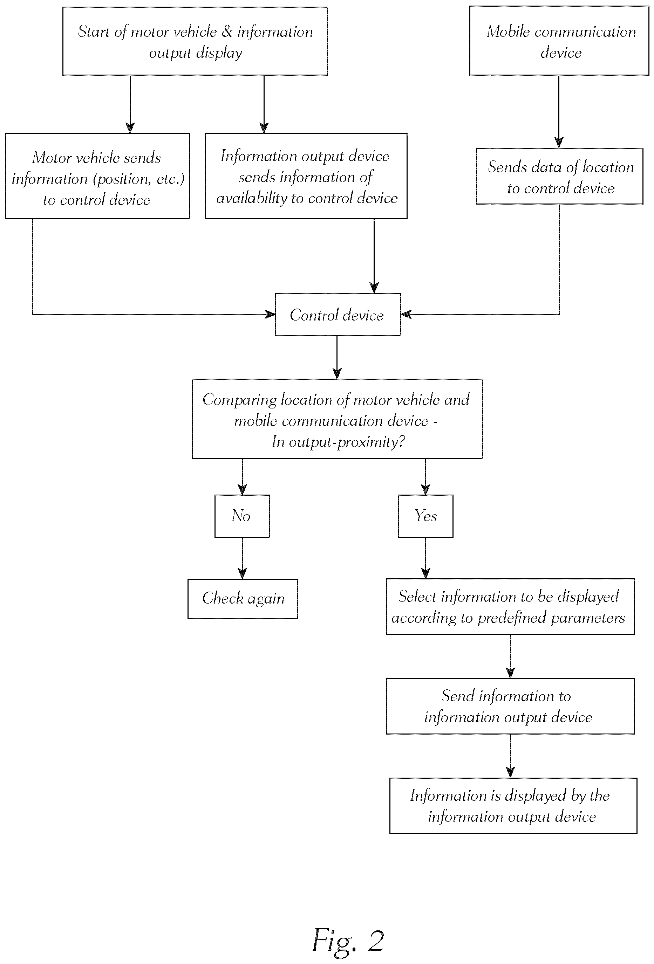

**Fig. 2** shows a method for outputting information to a traffic participant **20** in real-time by an information output system **10** according to the one described above. The method comprises as a first step a) providing of at least one motor vehicle **50,** including at least one information output device **100,** which is configured to output information intended for external traffic participants **20** of the motor vehicle **50,** wherein the information output device **100** is arranged on the at least one motor vehicle **50** in such a way that it allows external traffic participants **20** to perceive the information output by the information output device **100.**

Further, in step a) is also provided at least one mobile communication device **200,** such as an external traffic participants smartphone, wherein the mobile communication device **200** is configured to determine parameters that specify the information intended for the external traffic participant **20;** and a control device **300** for controlling the intended information output for the external traffic participant **20** of the motor vehicle **50** in real-time, wherein the control device **300** stores information intended for output by an information output device **100.**

The at least one mobile communication device **200** is wirelessly connectable to the control device **300** to provide the control device **300** with location data of the mobile communication device **200** and the parameters that can be determined by the mobile communication device **200,** wherein the motor vehicle **50** is wirelessly connectable to the control device **300** to provide the control device **300** with location data of the motor vehicle **50.**

In the shown time-line in **Fig. 2****,** the motor vehicle **50** starts and also the at least one information output device **100.** Upon starting the motor vehicle and the at least one information output device **100,** the information output device **100** is providing data to the control device **300** about the availability of the information output device **100.** The same applies for the motor vehicle **50,** which provides data in regard with the location of the motor vehicle **50.**

In a next step b), the method comparing the location data of the mobile communication device **200** with the location data of the at least one motor vehicle **50** by the control device **300** to determine whether the at least one motor vehicle **50** and the mobile communication device **200** are positioned in an output-proximity to one another, such that the information to be output by the information output device **100** of the at least one motor vehicle **50** is perceptible by the external traffic participant **20.**

Further, in a subsequent step c) the method actuating the information output device **100** of the at least one motor vehicle **50** by the control device **300** if the at least one motor vehicle **50** is in output-proximity to the mobile communication device **200,** such that the information specified based on the definable parameters is output by the information output device **100.** In case the motor vehicle **50** and the mobile communication device **200** are not in an output-prxomity, the control device **300** checks again.

It should be noted that despite mentioned in the figures only one motor vehicle **50** and one mobile communication device **200,** the system as well as the method are suitable for a plurality of motor vehicles **50** and mobile communication devices **200.**

It should also be mentioned that the embodiments disclosed in the figure description can be combined with one another in any desired manner, provided that such a combination is technically feasible. This applies even if a specific combination is not explicitly described.

### LIST OF REFERENCE SYMBOLS

| | |
|---|---|
| Information output system | 10 |
| Traffic participant | 20 |
| Motor vehicle | 50 |
| Information output device | 100 |
| Mobile communication device | 200 |
| Control device | 300 |

## Claims

1. **Information output system** (10) for providing information to traffic participants (20) in real-time, comprising the following:
- at least one motor vehicle (50), including:
- at least one information output device (100), which is configured to output information intended for external traffic participants (20) of the motor vehicle (50), wherein the information output device (100) is arranged on the at least one motor vehicle (50) in such a way that it allows external traffic participants (50) to perceive the information output by the information output device (100),
- at least one mobile communication device (200), such as an external traffic participants (20) smartphone, wherein the mobile communication device (200) is configured to determine parameters that specify the information intended for the external traffic participant (20),
- a control device (300) for controlling the information output intended for the external traffic participant (20) of the motor vehicle (50) in real-time, wherein the control device (300) stores information intended for output by an information output device (100),
wherein the at least one mobile communication device (200) is wirelessly connectable to the control device (300) to provide the control device (300) with location data of the mobile communication device (200) and the parameters that can be determined by the mobile communication device (200),
wherein the motor vehicle (50) is wirelessly connectable to the control device (300) to provide the control device (300) with location data of the motor vehicle (50),
and wherein the control device (300) is configured to compare the location data of the mobile communication device (200) with the location data of the motor vehicle (50) to determine whether the at least one motor vehicle (50) and the mobile communication device (200) are positioned in an output-proximity to one another, such that the information to be output by the information output device (100) of the at least one motor vehicle (50) is perceptible by the external traffic participant (20), wherein upon determining the output-proximity, the control device (300) actuates the information output device (100) of the at least one motor vehicle (50) such that the information specified based on the definable parameters is output by the information output device (100).

2. Information output system according to any one of the preceeding claims, **wherein** the definable parameters are at least one of the parameters of the group: adjustable events, such as traffic obstructions; position of the vehicle; time of day; location of the at least one mobile communication device; information of purchasing behaviour and/or search queries of the external traffic participant (20).

3. Information output system according to any one of the preceding claims, **wherein** the external traffic participant (20) is a pedestrian, cyclist or a driver of a motor vehicle.

4. Information output system according to any one of the preceding claims, **wherein** the mobile communication device (200) is a smartphone.

5. Information output system according to any one of the preceding claims, **wherein** the information output device (100) of the at least one motor vehicle (50) is at least one display, which is disposed on the outside of the motor vehicle (50).

6. Information output system according to any one of the preceding claims, **wherein** the information output system (10) comprises a plurality of motor vehicles (50).

7. Information output system according to any one of the preceding claims, **wherein** the information to be output by the information output device (100) is provided to the control device (300) by authorities, government and/or advertising providers.

8. Information output system according to any one of the preceding claims, **wherein** the control device (300) is configured to receive information about traffic situations and broadcast the information to at least one information output device (100) which is in the vicinity of the traffic situation.

9. **Method** for outputting information to a traffic participant (20) in real-time by an information output system (10) according to any on the preceding claims, wherein the method comprises the following steps:
a) Providing
- at least one motor vehicle (50), including:
- at least one information output device (100), which is configured to output information intended for external traffic participants (20) of the motor vehicle (50), wherein the information output device (100) is arranged on the at least one motor vehicle (50) in such a way that it allows external traffic participants (20) to perceive the information output by the information output device (100).
- at least one mobile communication device (200), such as an external traffic participants smartphone, wherein the mobile communication device (200) is configured to determine parameters that specify the information intended for the external traffic participant (20).
- a control device (300) for controlling the intended information output for the external traffic participant (20) of the motor vehicle (50) in real-time, wherein the control device (300) stores information intended for output by an information output device (300),
wherein the at least one mobile communication device (200) is wirelessly connectable to the control device (300) to provide the control device (300) with location data of the mobile communication device (200) and the parameters that can be determine by the mobile communication device (200),
wherein the motor vehicle (50) is wirelessly connectable to the control device (300) to provide the control device (300) with location data of the motor vehicle (50),
b) Comparing the location data of the mobile communication device (200) with the location data of the at least one motor vehicle (50) by the control device (300) to determine whether the at least one motor vehicle (50) and the mobile communication device (200) are positioned in an output-proximity to one another, such that the information to be output by the information output device (100) of the at least one motor vehicle (50) is perceptible by the external traffic participant (20),
c) Actuating the information output device (100) of the at least one motor vehicle (50) by the control device (300) if the at least one motor vehicle (50) is in output-proximity to the mobile communication device (200), such that the information specified based on the definable parameters is output by the information output device (100).
